Europäisches Patentamt

European Patent Office

Office européen des brevets

(11) Veröffentlichungsnummer: **0 215 189 B1**

(12) **EUROPÄISCHE PATENTSCHRIFT**

(45) Veröffentlichungstag der Patentschrift: **13.03.91**

(51) Int. Cl.⁵: **B60R  13/00**, B32B 27/32, C09J 7/02

(21) Anmeldenummer: **86106273.5**

(22) Anmeldetag: **07.05.86**

(54) Mehrschichtige, selbstklebende und tiefziehbare Schutzfolie insbesondere für Kraftfahrzeuge.

(30) Priorität: **28.05.85 DE 3519064**

(43) Veröffentlichungstag der Anmeldung:
**25.03.87 Patentblatt  87/13**

(45) Bekanntmachung des Hinweises auf die
Patenterteilung:
**13.03.91 Patentblatt  91/11**

(84) Benannte Vertragsstaaten:
**AT BE CH DE FR GB IT LI LU NL SE**

(56) Entgegenhaltungen:
**EP-A- 0 039 397**

(73) Patentinhaber: **HÜLS TROISDORF AKTIENGE-
SELLSCHAFT**
**Postfach 11 65**
**W-5210 Troisdorf(DE)AT BE CH DE FR GB IT
LI LU NL SE**

Patentinhaber: **Avery International Corporation**

**Wilmington Delaware 19801(US)BE DE FR GB
IT NL SE**

(72) Erfinder: **Kühnel, Werner**

**W-5206 Neunkirchen-Schöneshof(DE)**
Erfinder: **Simm, Manfred**
**Güldenbergstrasse 1**
**W-5210 Troisdorf(DE)**
Erfinder: **Spielau, Paul, Dr.**
**Van-Gogh-Platz 10**
**W-5210 Troisdorf-Eschmar(DE)**
Erfinder: **Kautz, Rudolf**
**Drosselweg 1**
**W-5202 Hennef(DE)**

Erfinder: **Harmsen, Johan**
**Wederikstraat 78**
**NL-2403 CG Alphen/Rijn(NL)**
Erfinder: **Van der Meij, Henk, Dr.**
**Van Beethovenlaan 20**
**NL-2394 Hazerswoude Rijndijk(NL)**


(74) Vertreter: **Meyer, Joachim et al**
**Hüls Troisdorf Aktiengesellschaft Kölner**
**Strasse 176 Postfach 1165**
**W-5210 Troisdorf(DE)**

**Beschreibung**

Die Erfindung betrifft eine mehrschichtige, selbstklebende und tiefziehbare Schutzfolie, insbesondere für die Innen- und Außenausstattung von Kraftfahrzeugen, bestehend aus

einer Trägerschicht enthaltend thermoplastischen Kunststoff, Füllstoffe und übliche Zusatzstoffe, einer selbstklebenden Haftschicht, ggf. einer auf der Trägerschicht aufgebrachten Primerschicht für die Haftschicht und einer Abdeckschicht aus Trennfolie oder Trennpapier auf der Haftschicht.

Mehrschichtige selbstklebende Schutzfolien auf Basis von weichmacherhaltigen EVA-PVC-Copolymerisat sind beispielsweise aus der DE-OS 32 19 645 bekannt, die insbesondere dem Schutz gegen Steinschlag bei Kraftfahrzeugen dienen und als Dekorfolie appliziert werden. Nachteilig bei diesen Folien ist der Gehalt an Polyvinylchlorid, da bei hohen Abgastemperaturen die Gefahr der Bildung von die Korrosion förderndem Chlorwasserstoff besteht. Desweiteren kann durch Weichmacherverlust eine Versprödung eintreten, sodaß der Schutz gegen Steinschlag sich verringert, insbesondere bei Minustemperaturen. In der DE-OS 28 06 726 wird eine als Dröhnschutz ausgebildete Schutzschicht für Kraftfahrzeugböden beschrieben die eine Trägerschicht auf Basis von Polyolefinen, insbesondere Ethylen-Propylen-Kautschuk, und mindestens 30 Gew.-% vorzugsweise mindestens 70 Gew.-% Füllstoffen auf Basis Bitumen, weichmachender Substanzen, wie Öle und akustisch wirksame Mineralstoffe wie Talkum, Schiefermehl, Graphit, Glimmer enthält. Diese überwiegend weichplastische und einen Schallschutz bewirkende Schwerfolie wird mittels Vulkanisationskleber oder Heißsiegelkleber dauerhaft mit dem Karosserieblech verbunden. Die hohen Füllstoffanteile dieser Folie reduzieren jedoch die Festigkeiten der Folie und begünstigen bei kalandrierten Folien den sogenannten Weißbruch. Da die Folien bei der Applizierung auf die Karosserieteile verformt werden, ist Weißbruch in jedem Fall aus optischen Gründen unerwünscht. Auch der Schutz gegen Steinschlag ist nicht ausreichend bei dieser Schutzschicht.

Aus der EP-OS 01 33 238 sind Mehrschichtfolien für Kraftfahrzeuge ebenfalls auf Basis von innerlich weichgemachten Vinylchlorid-Copolymeren oder auf Basis von weichmacherhaltigem Polyvinylchlorid, bekannt, denen die gleichen Nachteile wie der Schutzfolie gemäß DE-OS 32 19 645 anhaften.

Der Erfindung liegt die Aufgabe zugrunde, eine mehrschichtige Schutzfolie zu schaffen, die sowohl für die Innen- und Außenausstattung von Kraftfahrzeugen eingesetzt werden kann, die als Selbstklebefolie mit guter Tiefziehfähigkeit ausgebildet ist und gute Festigkeitswerte bei guter Witterungsbeständigkeit und Lebensdauer sowohl bei hohen Temperaturen als auch bei niedrigen Temperaturen aufweist, und die insbesondere eine hohe Resistenz gegen Steinschlag aufweist.

Eine optimale Schutzfolie, die die guten Eigenschaften der bekannten Schutzfolie vereinigt und die Nachteile derselben bei wesentlich erhöhter Steinschlagfestigkeit vermeidet, ist gemäß der Erfindung dadurch gekennzeichnet, daß die Trägerfolie

65 bis 25 Gew.-%
Ethylen-Propylen-Dien-Terpolymer und/oder Ethylen-Propylen-Copolymer
35 bis 75 Gew.-%
Homo- und/oder Copolymer von Propylen
0 bis 10 Gew.-%
Füllstoffe wie Kreide, Ruß, Kieselerde, Kieselsäureanhydrid
sowie zusätzlich Gleitmittel und Stabilisatoren enthält,
daß die Haftschicht aus einer Selbstklebemasse auf Basis von Alkylacrylaten und/oder Methacrylat und/oder copolymerisierbaren ethylenisch ungesättigten Monomeren, wie Acrylsäure, besteht und vernetzt ist, daß als Abdeckschicht eine einseitig silikonisierte Polyolefinfolie vorgesehen ist.

Mit der Erfindung ist eine leichtgewichtige Schutzfolie aus Kunststoff geschaffen, die bei großer Flexibilität einen gegenüber den bisher bekannten Folien wesentlich erhöhten Schutz gegen Steinschlag auch bei Minustemperaturen bietet. Die erfindungsgemäße Schutzfolie kann auch in entsprechender Einfärbung, neben der Schutzwirkung zugleich unter ästhetischen Gesichtspunkten am Kraftfahrzeug angebracht werden. Die erfindungsgemäße Schutzfolie erhält ihre herausragenden Eigenschaften der Tiefziehbarkeit, der Leichtgewichtigkeit, der Kälteschlagzähigkeit und Schlagzähigkeit durch die ausgewählten Schichten.

Die erfindungsgemäße füllstofffreie bzw. nahezu füllstofffreie Trägerfolie aus EPDM/EPM und Polypropylen erfüllt in Verbindung mit der speziellen Haftschicht und der Abdeckschicht ein Bündel von Eigenschaftsforderungen, die im Kraftfahrzeuganwendungsbereich eine hohe Lebensdauer und Funktionstüchtigkeit gewährleisten.

Diese wesentlichen geforderten Eigenschaften, die durch die erfindungsgemäße Schutzfolie erfüllt werden, sind:

1. sehr gute Steinschlagfestigkeit - infolge der elastomeren Trägerfolie in Verbindung mit der Haftschicht
2. gute Kältebeständigkeit
3. hohe Reißfestigkeit und Dehnung
4. hohe Weiterreißfestigkeit
5. geringe Feuchtigkeitsempfindlichkeit
6. gute Abriebfestigkeit der Trägerfolie

7. gute Haftung der Haftschicht an der Trägerfolie

8. ausreichende Benzinbeständigkeit

9. gute Licht- und Witterungsbeständigkeit der Trägerfolie

10. matte Oberflächen der Trägerfolie, geeignet zur Prägung

11. gute Tiefziehfähigkeit der gesamten mehrschichtigen Schutzfolie

12. Temperaturbeständigkeit des geformten Teiles aus der Schutzfolie nach dem Tiefziehen, d.h. gute Wärmeformbeständigkeit

13. kein Rückschrumpfen unter Sonnenbestrahlung des geformten Teiles aus der Schutzfolie

14. kein Weißbruch der Trägerfolie beim Verformen

15. Erhalt der Prägung der Trägerfolie auch beim und nach dem Verformen

16. einfache Handhabung der Schutzfolie beim Aufbringen des verformten Teiles auf das Kraftfahrzeug

17. leichte Korrekturmöglichkeit der Position beim Aufbringen des verformten Teiles auf das Kraftfahrzeug, da die selbstklebende Haftschicht erst nach etwa 30 min. fest anzieht, sodaß ein Ablösen des Teiles in der Anbringphase möglich ist.

18. Dünne Schutzfolien bedeuten geringes Gewicht

19. Korrosionsschutz

In weiterer Ausbildung der Erfindung wird vorgeschlagen, für die Trägerfolie solche thermoplastischen Kunststoffe und Massen auszuwählen, die sowohl das Herstellen der Trägerfolie durch Extrusion als auch durch Kalandrieren ermöglichen, wobei insbesondere die Verarbeitung von Polypropylen, das sehr schnell zum kleben neigt, problematisch ist. Um die an die Verarbeitbarkeit und die mechanischen Eigenschaften der Trägerfolie bzw. der Schutzfolie gestellten Anforderungen möglichst gut zu erfüllen, wird erfindungsgemäß für die Trägerfolie ein teilkristallines Ethylen-Propylen-Copolymer und/oder Ethylen-Propylen-Dien-Terpolymer aus 65 bis 82 Gew.-% Ethylen, 18 bis 35 Gew.-% Propylen, o bis 8 Gew.-% Terkomponente insbesondere Ethylidennorbonen, die einen Schmelzindex MFI (230/5) von 0,5 bis 2,0 g/10 min. und eine Zugfestigkeit von mindestens 5 N/mm² aufweisen, eingesetzt. Als Propylen-Homopolymer und/oder PropylenCopolymer werden bevorzugt solche mit einem Schmelzindex MFI (190/5) kleiner als 1g/10min. eingesetzt, daß sind insbesondere Propylen-Homopolymere, statistische Propylen-Copolymere, Block-Propylen-Copolymer mit 5 bis 20 Gew.-% copolymerisiertem Ethylen, die einen besonders niedrigen Schmelzindex aufweisen. Jedoch ist bei der Verarbeitung, d.h. Herstellung der Trägerfolie durch Kalandrieren zu beachten, daß dann Polypropylen mit einem MFI (230°c/ 21,6 N) kleiner 0,1 9/10 min sich nicht mehr für den Einsatz eignet, da es sich nicht ausreichend kalandrieren läßt.

Die erfindungsgemäß ausgewählten und für die Folie eingesetzten teilkristallinen Ethylen-Propylen-Dien-Terpolymere mit einer sehr hohen Zugfestigkeit bzw. Reißfestigkeit von mindestens 15 N/mm², bevorzugt von mindestens 2o N/mm², deren Kristallinitätsgrad mit der DSC-Maximumtemperatur korreliert ist und mindestens etwa 40° C beträgt, im Vorzugsbereich mindestens etwa 43° C, ermöglichen in Zusammenwirken mit den ausgewählten Polypropylenen die Herstellung der Folie durch Kalandrieren oder Extrusion mit den beschriebenen Eigenschaften.

Als Terkomponente kommen hierbei insbesondere Etyhlidennorbonen infrage, jedoch auch Dicyklopentadien, Alkenylnorbone, Alkadiene und Cykloalkadiene.

Da das Ausmaß der Kristallinität auch mit dem Ethylengehalt ebenso wie mit der Zugfestigkeit korreliert, werden in einer bevorzugten Ausführung der Erfindung Ethylen-Propylen-Dien-Terpolymere mit einem Fthylengehalt von mindestens 70 Gew.-% eingesetzt.

Die teilkristallinen EPDM's haben auch gegenüber den amorphen oder nahezu amorphen EPDM's den bearbeitungstechnischen Vorteil, daß sie in krümeliger Form anfallen und auch pelletisierbar sind und daher leicht dosierbar und mischbar. Die amorphen Kautschuke hingegen sind gummiartig und liegen in Klumpen- oder Ballenform vor und sind nicht ohne Zusätzepelletisierbar.

Die DSC-Maximumtemperatur der EPDM's wird mit dem Differential Scanning Kalorimeter ermittelt, ebenso die Kristallisationswärme. Auch letztere ist ein Maß für den Kristallinitätsgrad. Die Kristallisationswärme der erfindungsgemäß eingesetzten Ethylen-Propylen-Dien-Terpolymere sollte etwa mindestens 15 cal/g betragen.

Da Füllstoffe im allgemeinen die Festigkeitseigenschaften der Trägerschicht reduzieren, werden Füllstoffe bei der erfindungsgemäßen Schutzfolie für die Trägerfolie nur in geringen Mengen zugesetzt, wobei es sich einerseits um anorganische pulvrige Füllstoffe, wie Kreide, Kalk, Talkum oder Kaolin handeln kann oder aber bevorzugt auch um sogenannte verstärkende Füllstoffe wie halbaktive oder aktive Ruße, Kieselerde, Kieselsäureanhydrid, Glasfasern, oder Mischungen der vorgenannten Füllstoffe. Auch Glimmer oder Schwerspat können in geringen Mengen vorgesehen werden.

Zusätzlich enthält die Trägerfolie Stabilisatoren und Alterungsschutzmittel für Polyolefine, insbesondere auf Basis sterisch gehinderter phenolischer Antioxydantien, phenolischer Phosphite, Thioester aliphatischer Carbonsäuren und ähnliche. Als Gleitmittel für die Verarbeitung werden insbesondere Metallsalze von Carbonsäuren, wie beispielsweise Calciumseifen, Calciumstearat, Zinkstearat sowie als weitere Verarbeitungshilfmittel insbesondere Montansäureester und/oder hydrierte Kohlenwasserstoffharze zugegeben.

Es ist natürlich auch möglich, der Trägerschicht noch Farbmittel zuzusetzen, die jedoch ebenfalls sehr feinteilig wie die anderen Füllstoffe sein sollten, sodaß sie sich auch nicht nachteilig bei der weiteren Verarbeitung durch Tiefziehen der Schutzfolie störend bemerkbar machen. Als Farbmittel können neben Farbstoffen, Pigmenten, wie Titandioxyd, auch Ruß in geringen Mengen eingesetzt werden, der zudem noch den Vorteil der Erhöhung der Witterungsbeständigkeit der Trägerschicht aufweist. Hierbei genügen bereits geringe Anteile in der Trägerschicht.

Zusätzlich können im Hinblick auf die Verarbeitbarkeit der eingesetzten Ethylen-Propylen-Polymere auch weichmachende Substanzen in geringen Mengen, wie aliphatische und/oder naphtenische Extenderöle der Trägerschicht zugegeben werden.

Eine bevorzugte Ausbildung gemäß der Erfindung der Trägerschicht für die Schutzfolie mit hohen Elastomeranteilen, die besonders gute Eigenschaften in der Kälte, wie hohe Schlagzähigkeit aufweist, zeichnet sich durch die Zusammensetzung gemäß dem Merkmal des Anspruches 4 aus. Hierbei wird die Trägerschicht durch Kalandrieren oder Extrudieren als Folie hergestellt, wobei kalandrierte Folien Dicken ab 0,2 mm bis 0,75 mm aufweisen und extrudierte Folien Dicken von etwa 0,6 mm bis etwa 2 mm. Es ist möglich, besonders dicke Folien dann durch Duplieren oder Triplieren herzustellen.

Für Anwendungsbereiche im Kraftfahrzeug, bei denen keine extreme Kälteschlagzähigkeit gefordert wird, wird erfindungsgemäß eine etwas härter eingestellte Trägerfolie vorgeschlagen, die durch die Merkmale des Patentanspruchs 5 gekennzeichnet ist.

Die Trägerfolie gemäß der Erfindung läßt sich besonders gut durch Prägen der Oberfläche in matter oder genarbter Struktur veredeln. Hierbei zeigt sich die Qualität des Materials der Trägerfolie, da auch bei der nachfolgenden Verformung der Schutzfolie und Trägerfolie, z.B. durch Vakuumtiefziehen, die Prägung der Oberfläche der Trägerfolie einwandfrei erhalten bleibt. Es ist auch möglich, die Oberfläche der Trägerfolie ggf. zu bedrucken.

Für die Haftschicht werden ganz bevorzugt selbstklebende Haftkleber (pressure sensitive) auf Basis von Acrylaten eingesetzt, die in einer üblicherweise 30 bis 40% Kleberlösung mit geeigneten Lösungsmitteln wie Isopropanol, Hexan, Toluol, Ethylacetat, o. dergl. oder Mischungen hiervon gelöst werden und denen zur Vernetzung geeignete Vernetzungsmittel oder Katalysatoren, wie metallorganische Verbindungen, z.B. Titanacetylacetonat, zugegeben werden. Diese Lösung wird bevorzugt auf die Trägerfolie aufgetragen.

Nach Abdunsten des Lösungsmittels werden die Schichten zur Schutzfolie verbunden. In weiterer Ausgestaltung der Erfindung ist hierbei vorgesehen, die Haftschicht d.h. die Haftklebemasse in einer Dicke, die einem Flächengewicht von etwa 40 bis 100 g/m² entspricht, aufzutragen (Feststoffanteile). Zur Erhöhung der Haftfestigkeit zwischen Trägerfolie und Haftschicht wird die zu verbindende Oberfläche der Trägerfolie in geeigneter Weise vorbehandelt; bevorzugt durch eine Corona-Entladungsbehandlung. Es ist auch möglich, eine geeignete Primerschicht aufzutragen.

Die für die Erfindung besonders geeigneten Haftkleber auf Acrylatbasis sind scherstabil, alterungsbeständig, dauerbeständig, feuchtigkeitsbeständig, lösungsmittel- und benzinbeständig, witterungsbeständig und dimensionsstabil. Die Haftkleber ermöglichen ein leichtes Anbringen und Verändern der Position während der Montage. Auch nach dem Festwerden des Haftklebers kann für Reparaturfälle das aus der Schutzfolie geformte Teil mit etwas Kraftaufwand wieder von der Karosserie entfernt werden.

Für die erfindungsgemäße Schutzfolie wird bevorzugt eine etwas dickere Trennfolie als Abdeckschicht für die Haftschicht vorgesehen, die sich besonders gut auch Verformen läßt. Bevorzugt werden beispielsweise Polypropylenfolien einer Dicke von etwa 50 bis 150µ. Um das leichte Ablösen der Abdeckschicht vor dem Aufkleben des aus der Schutzfolie geformten Teiles auf das Kraftfahrzeug sicherzustellen, sollte die Polyolefinfolie stets eine silikonisierte Seite gegenüber der Haftschicht aufweisen, nach Art eines Releasepapieres.

Die erfindungsgemäße Schutzfolie findet insbesondere Anwendung zur Verkleidung von Karosserieteilen von Kraftfahrzeugen und zwar sowohl im Außenbereich als auch im Innenbereich. Hierbei werden bevorzugt vorgeformte, fertige Verkleidungsteile aus der Schutzfolie z.B. durch Tiefziehen hergestellt und appliziert. Sie dienen sowohl einerseits dem Schutz gegen mechanische Beschädigung wie Steinschlag, Kratzen, und so fort, sowie als Korrosionsschutz. Alle äußeren Wagen- bzw. Karosserieteile, die von Steinschlag betroffen sind, wie z.B. Türschwellenbereiche, Radkasten, Boden- und Seitenbereiche, Frontpartien, können mit Schutzfolie oder hieraus geformten Teilen abgedeckt werden. Auch Fensterumrahmungen, Partien hinter Nummernschildern usw. können durch Anwendung der Erfindung geschützt werden. Die hohe Flexibilität der Schutzfolie läßt einen hohen Verformungsgrad und damit gute Anpassung an die vorgegebenen Formen zu. Im Innenbereich des Kraftfahrzeuges können sowohl Gepäckräume, Fahrzeugböden, Türinnenverkleidungen, Tunnelabdeckungen usw. ganz oder teilweise mit der erfindungsgemäßen Schutzfolie abgedeckt werden. Die erfindungsgemäße Schutzfolie kann entsprechend den Wünschen der Kraftfahrzeugindustrie eingefärbt werden. Die erfindungsgemäße Schutzfolie eignet sich sowohl für die Anwendung direkt bei der Herstellung des Kraftfahrzeuges als auch für eine spätere Applikation als auch für Repraraturen, auch nach Entfernen beispielsweise eines beschädigten Schutzfolienbereiches.

Eine wesentliche Eigenschaft der erfindungsgemäßen Schutzfolie ist ihre Tiefziehbarkeit, d.h. die Möglickeit, durch Warmverformung, insbesondere Tiefziehen beispielsweise mittels Vakuum gegen eine entsprechende Form, vorgeformte Teile herzustellen. Hierbei muß die erfindungsgemäße Schutzfolie in ihrer Gesamtheit, d.h. mit allen ihren Schichten tiefziehfähig sein. Erst bei der späteren Applikation des vorgeformten Teils aus der erfindungsgemäßen Schutzfolie wird die Abdeckschicht abgezogen und das Teil unter Anwendung von Druck an dem Kraftfahrzeug haftfest aufgebracht. Die Haftschicht ist so eingestellt, daß sie nach dem Aufbringen innerhalb kurzer Zeit zu einer dauerhaften und festen Verklebung führt, die jedoch für einen Reparaturfall mit einem gewissen Kraftaufwand wieder gelöst werden kann, d.h. das die Schutzfolie ggf. wieder entfernt werden kann.

Die erfindungsgemäße Schutzfolie ist jedoch auch so weitgehend biegsam und verformbar, daß sie bei geringen gewünschten Deformierungsgraden auch ohne Vorformung auf einen entsprechenden Bereich des Kraftfahrzeuges aufgebracht werden kann. Sowohl nach der Verformung, durch beispielsweise Tiefziehen oder aber auch bei Kaltverformung behält diese nach dem Erkalten die ihr aufgezwungene Form bei.

Vielfach ist es erwünscht, daß die Schutzfolie bzw. das aus der Schutzfolie hergestellte Formteil eine geprägte und mattierte Oberfläche aufweist. Es ist ein wesentlicher Vorzuf der erfindungsgemäßen Schutzfolie, daß die bei der Herstellung zum Beispiel nach dem Kalandrieren oder Extrudieren geprägte Oberfläche durch Tiefziehen ihre Prägung beibehält, dies ist auf die gute Wärmeformbeständigkeit der Trägerfolie zurückzuführen.

Die Erfindung ist in der Zeichnung beispielhaft dargestellt. Es zeigen

Figur 1 Ansicht der Schutzfolie

Figur 2 Ansicht eines tiefgezogenen Formteils.

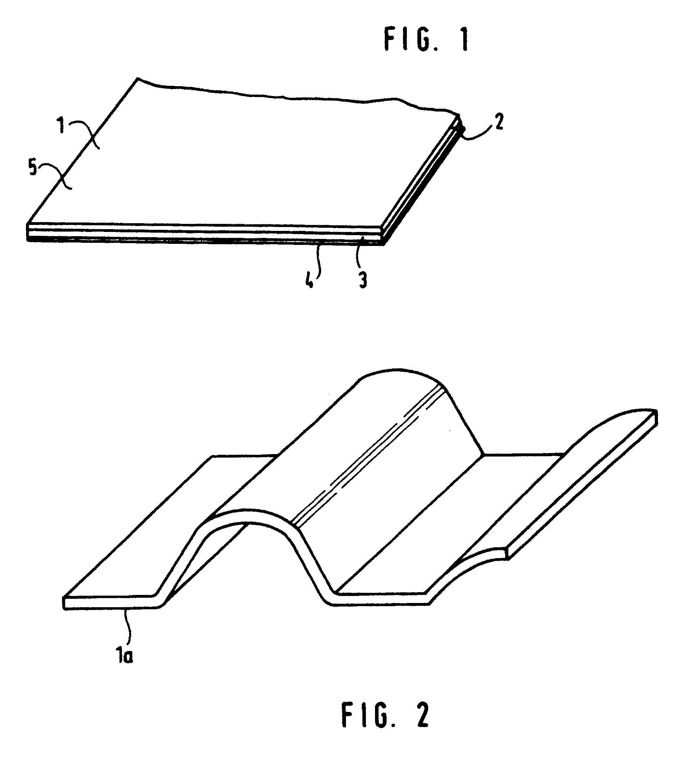

In der Figur 1 ist schematisch der Aufbau der selbstklebenden mehrschichtigen und tiefziehbaren Schutzfolie 1 dargestellt. Die Trägerfolie 2, die zugleich die Schutzschicht für das zu schützende Teil, beispielsweise einen Kraftfahrzeugunterboden bilden soll, besteht im wesentlichen aus einer kalandrierten oder extrudierten Kunststoffolie auf Basis von EPDM und/oder EPM und Propylen-Homopolymer und/oder Propylen-Copolymer. Diese Trägerfolie 2, die ggf. auf ihrer Oberseite 5 geprägt sein kann, ist auf ihrer Unterseite mit der selbstklebenden Haftschicht 3 haftfest verbunden. Die selbstklebende Haftschicht 3 ist mit der Abdeckfolie 4, beispielsweise einer dünnen Polyolefin-Folie abgedeckt. Die in der Figur 1 dargestellte mehrschichtige Schutzfolie 1 wird beispielsweise zu einem Formteil gemäß Figur 2 verformt. Diese Verformung kann beispielsweise mittels Tiefziehen erfolgen, wobei die mehrschichtige Schutzfolie auf eine Temperatur von etwa 125 bis 150 ° C vorgewärmt und dann mittels Vakuum gegen eine Form verformt wird. Bei dieser Verformung kommt die Oberseite der Trägerfolie 2 zum Anliegen an die Form.

Es ist aber auch möglich, die mehrschichtige Schutzfolie 1 gemäß Figur 1 mittels einer Formpresse ebenfalls unter Vorwärmung der Schutzfolie zu der gewünschten Form zu verpressen. Das beispielsweise wie in der Figur 2 dargestellte Formteil 1a wird dann auf den entsprechenden Bereich des Kraftfahrzeuges aufgebracht, indem die Abdeckschicht 4, beispielsweise die Polyolefin -Folie abgezogen und das Formteil 1a angedrückt wird. Die Verfestigung der Verklebung erfolgt innerhalb weniger Stunden, sodaß der sichere dauerhafte Sitz des Formteiles gewährleistet ist.

Der Aufbau der erfindungsgemäßen mehrschichtigen Schutzfolie wird nachfolgend an Beispielen erläutert.

Für die Prüfung der Eigenschaften werden folgende Methoden angewendet:

- MFI (190/5) bzw. MFI (230/5) g/10 min nach DIN 53735
- Reißfestigkeit nach DIN 53455
- Reißdehnung nach DIN 53455
- Steinschlagtest mit Steinen nach ASTM D-968
- Streckspannung DIN 53455

Beispiel 1: Herstellung der Trägerfolie

60 Gew.-Teile Polypropylen-Copolymerisat mit einem Ethylengehalt von 10% und einem MFI (190/5) von 0,8 g/10 min werden mit 40 Gew.-Teilen EPDM einer Mooney-Viskosität ML (1 + 4) 100 ° C von 85, einem MFI (230/5) von 0,8 g/10 min und einem Ethylengehalt von 67 Gew.-% einem Propylengehalt von 30 Gew.-% und einem Ethylidennorbonengehalt von 3 Gew.-% mit 0,45 Gew.-Teilen Stabilisator, 0,15 Gew.-Teilen Gleitmittel und 2 Gew.-Teilen Farbe in einem Heizkühlmischer zu einer rieselfähigen Mischung verarbeitet, in einer Doppelschnecke bei Temperaturen bis zu 200°C plastifiziert und homogenisiert und einem Walzwerk zugeführt. Von diesem wird die Masse mit einer Temperatur von etwa 180°-190°C einem Kalander zugeführt und zu einer Folie von 0,75 mm ausgezogen. Am Auslauf des Kalanders befindet sich eine Prägevorrichtung, mit der die gewünschte Oberflächenstruktur bei einer Prägetemperatur von etwa 120°C erzeugt wird. Die Folie besitzt eine Reißfestigkeit in Längserstreckung von 28 N/mm² und Reißdehnung in Längserstreckung von 635%.

Beispiel 2: Herstellung einer Trägerfolie

47 Gew.-Teile des in Beispiel 1 genannten Polypropylen-Copolymers werden mit 53 Gew.-Teilen des EPDM's aus Beispiel 1 und den übrigen Zuschlägen des Beispiels 1 in einem Heizkühlmischer vorgemischt, einem Zweiwellenkneter zugeführt und bei 170 bis 180°C plastifiziert und auf ein Walzwerk mit Temperaturen von etwa 180 bis 200°C gebracht. Über einen Strainer erfolgt die Beschickung des Kalanders mit der auf etwa 190°C plastifizierten Masse, die zu einer Folie einer Dicke von 0,8 mm kalandriert wird mit nachfolgender Prägung.

Die 0,8 mm starke Folie besitzt eine Reißfestigkeit in Längsrichtung von 26,5 N/mm² und eine Reißdehnung in Längsrichtung von 650% und eine Streckspannung in Längsrichtung von 10,6 N/mm².

Beispiel 3:

42 Gew.-Teile eines Polypropylen-Homopolymers mit einer Dichte von 0,9 g/ml und einem MFI (190/5) von 0,7 g/10 min. werden mit 58 Gew.-Teilen des EPDM's aus Beispiel 1 in einem Heizkühlmischer vorgemischt, in einem Innenmischer plastifiziert und homogenisiert und über ein Walzwerk dem Kalander zugeführt, zur Folie einer Dicke von 0,8mm ausgezogen und geprägt. Die Folie weist eine Reißfestigkeit in Längserstreckung von 25 N/mm² und eine Reißdehnung in Längserstreckung von 680% auf.

Die nach den Beispielen 1-3 hergestellten Trägerfolien werden dann auf der später mit der Haftschicht zu verbindenden Seite einer Coronabehandlung unterzogen.

Auf die vorbehandelte Seite der Trägerfolie gemäß Beispielen 1 bis 3 wird die Haftklebemasse aus einer 35% igen Lösung (35 Gew.-% Feststoffgehalt) eines Haftklebers auf Basis Acrylaten, wie z.B. 52,5 Gew.-Teile 2-Ethylhexylaerylat, 37,5 Gew.-Teile Methylacrylat und 10 Gew.-Teile Acrylsäure, sowie Vernetzungsmittel aufgestrichen, wobei nach Abdunsten des Lösungsmittels und Trocknen die aufgetragene Haftklebemasse ein Flächengewicht von 60 g/m² aufweist. Das Trocknen kann bei erhöhten Temperaturen von etwa 60 bis 120°C vorgenommen werden. Die so beschichteten Trägerfolien werden nach konventionellen Verfahren mit der Trennfolie zu der Schutzfolie laminiert. Als Trennfolie bzw. Abdeckschicht wird eine 80 μ bzw. 120 μ dicke Polyethylen - bzw. Polypropylenfolie ausgewählt, die einseitig mit einer Silikon-Trennschicht lackiert ist.

Für die Herstellung der Verkleidungsteile werden aus der Schutzfolie entsprechend der Konfiguration des gewünschten Teiles Stanzzuschnitte gefertigt, die dann im Tiefziehverfahren, insbesondere im Vakuum-Tiefziehverfahren, unter Vorwärmung auf Temperaturen von etwa 120 bis 150°C zu der gewünschten Form verformt werden.

Die mehrschichtige Schutzfolie läßt sich hierbei einwandfrei, ohne Faltenbildung und ohne Weißbruch zu zeigen, verformen.

Auch andere Tiefziehverfahren, wie das Vakuum-Druckverfahren mit Positiv- oder Negativform können angewendet werden.

**Ansprüche**

1. Mehrschichtige, selbstklebende und tiefziehbare Schutzfolie, insbesondere für die Innen- und Außenausstattung von Kraftfahrzeugen, bestehend aus
   - einer Trägerfolie, enthaltend thermoplastischen Kunststoff, Füllstoffe und übliche Zusatzstoffe,
   - einer selbstklebenden Haftschicht,
   - ggf. einer auf der Trägerschicht aufgebrachten Primerschicht für die Haftschicht und
   - einer Abdeckschicht aus Trennfolie oder Trennpapier auf der Haftschicht, **dadurch gekennzeichnet,** daß die Trägerfolie

   65 bis 25 Gew.-%
   Ethylen-Propylen-Dien-Terpolymer und/oder Ethylen-Propylen-Copolymer aus 65 bis 82 Gew.-% Ethylen, 18 bis 35 Gew.-% Propylen und 0 bis 8 Gew.-% Terkomponente,
   35 bis 75 Gew.-%
   Homo- und/oder Copolymer von Propylen
   0 bis 10 Gew.-%
   Füllstoffe wie Kreide, Ruß, Kieselerde, Kieselsäureanhydrid
   sowie zusätzliche Gleitmittel und Stabilisatoren enthält,
   - daß die Haftschicht aus einer vernetzten Selbstklebemasse auf Basis von Alkylacrylaten und/oder Methacrylat und/oder
copolymerisierbaren ethylenisch ungesättigten Monomeren, wie Acrylsäure,
besteht und

- daß als Abdeckschicht eine einseitig silikonisierte Polyolefinfolie vorgesehen ist.

2. Schutzfolie nach Anspruch 1, **dadurch gekennzeichnet,** daß für die Trägerfolie ein teilkristallines Ethylen-Propylen-Copolymer und/oder
Ethylen-Propylen-Dien-Terpolymer aus
65 bis 82 Gew.-%
Ethylen
18 bis 35 Gew.-%
Propylen
0 bis 8 Gew.-%
Terkomponente
mit einem Schmelzindex MFI (230/5) von
0,5 bis 2,0 g/10 min und einer Zugfestigkeit
von mindestens 5 N/mm² eingesetzt ist.

3. Schutzfolie nach Anspruch 1, **dadurch gekennzeichnet,** daß ein Propylen-Homopolymer
und/oder Propylen-Copolymer mit einem
Schmelzindex MFI (190/5) kleiner als 1 g/10
min. eingesetzt ist.

4. Schutzfolie nach einem der Ansprüche 1 bis 3,
**dadurch gekennzeichnet,** daß die Trägerfolie
durch Kalandrieren oder Extrudieren von
60 bis 40 Gew.-%
EPDM und/oder EPM,
40 bis 60 Gew.-%
Homo- und/oder Copolymer von Propylen
0 bis 6 Gew.-%
Füllstoffe
sowie auf 100 Gew.-Teile der vorgenannten
Kunststoffe
0,1 bis 1,0 Gew.-Teile
Stabilisatoren wie sterisch gehinderte phenolische Antioxydantien, phenolische
Phosphite, Thioester aliphatischer Carbonsäuren,
0,1 bis 2 Gew.-Teile
Gleitmittel, wie Metallsalze der Carbonsäuren, Montansäureester, hydrierte Kohlenwasserstoffharze
0 bis 5 Gew.-Teile
Farbmittel
0 bis 4 Gew.-Teile
aliphatische und/oder naphtenische Extenderöle
in einer Dicke von etwa 0,2 bis 2 mm hergestellt ist und in Längsrichtung eine Zugfestigkeit von mindestens 24 N/mm² sowie
eine Reißdehnung von mindestens 450%
aufweist.

5. Schutzfolie nach einem der Ansprüche 1 bis 3,
**dadurch gekennzeichnet,** daß die Trägerfolie
durch Kalandrieren oder Extrudieren von
45 bis 25 Gew.-%
EPDM und/oder EPM,
75 bis 55 Gew.-%
Homo- und/oder Copolymer von Propylen
0 bis 6 Gew.-%
Füllstoffe
sowie auf 100 Gew.-Teile der vorgenannten
Kunststoffe
0,1 bis 1,0 Gew.-Teile
Stabilisatoren wie sterisch gehinderte phenolische Antioxydantien, phenolische
Phosphite, Thioester aliphatischer Carbonsäuren,
0,1 bis 2 Gew.-Teile
Gleitmittel, wie Metallsalze der Carbonsäuren, Montansäureester, hydrierte Kohlenwasserstoffharze
0 bis 5 Gew.-Teile
Farbmittel
0 bis 4 Gew.-Teile
aliphatische und/oder naphtenische Extenderöle
in einer Dicke von etwa 0,2 bis 2 mm hergestellt ist und in Längsrichtung eine Zugfestigkeit von mindestens 24 N/mm² sowie
eine Reißdehnung von mindestens 450%
aufweist.

6. Schutzfolie nach einem der Ansprüche 1 bis 5,
**dadurch gekennzeichnet,** daß die Haftschicht
in einer Dicke entsprechend einem Flächengewicht von etwa 40 bis 100 g/m² vorgesehen ist.

7. Schutzfolie nach einem der Ansprüche 1 bis 6,
**dadurch gekennzeichnet,** daß die Trägerfolie
auf der mit dar Haftschicht verbundenen Seite
mittels Coronaentladung vorbehandelt ist.

8. Schutzfolie nach einem der Ansprüche 1 bis 7,
**dadurch gekennzeichnet,** daß als Abdeckschicht eine Polypropylenfolie einer Dicke von
etwa 50 bis 150 µ vorgesehen ist.

**Claims**

1. Multilayered self-adhering and deep drawable
protective foil, in particular for the internal and
external equipping of motor vehicles, consisting of

- a support foil containing thermoplastic
plastics, fillers and conventional additives,
- a self-sticking adhesive layer,

- optionally a primer layer for the adhesive layer applied to the support layer and
- a covering layer of separating foil or separating paper on the adhesive layer, characterised in that the support foil contains

65 to 25 wt.-% of
ethylene-propylene-dien-terpolymer and/or ethylene-propylene-copolymer consisting of 65 to 82% by wt. of ethylene, 18 to 35% by wt. propylene and 0 to 8% by wt. of tercomponent,
35 to 75 wt.-% of
homo- and/or copolymer of propylene
0 to 10 wt.-% of
Fillers-like chalk, carbon black, silica and silicic anhydride
as well as additional lubricants and stabilisers,

- that the adhesive layer consists of a cross-linked self-adhering material based on alkyl acrylates and/or methacrylates and/or copolymerasible ethylenically unsaturated monomers, like acrylic acid, and
- that a polyolefin foil siliconised on one side is provided as covering layer.

2. Protective foil according to claim 1, characterised in that a partially crystalline ethylene-propylene copolymer and/or ethylene-propylene-diene-terpolymer of
65 to 82 wt.-%
ethylene
18 to 35 wt.-%
propylene
0 to 8 wt.-%
tercomponent
with a melt index MFI (230/5) of 0.5 to 2.0 g/10 min. and a tensile strength of at least 5 N/mm² is employed for the support foil.

3. protective foil according to claim 1, characterised in that a propylene homo-polymer and/or propylene copolymer with a melt index MFI (190/5) of less than 1 g/10 min. is employed.

4. protective foil according to one of claims 1 to 3, characterised in that the support foil is produced in a thickness of about 0.2 to 2 mm by calendering or extrusion of
60 to 40 wt.-%
EPDM and/or EPM,
40 to 60 wt.-% of
homo- and/or copolymer of propylene

0 to 6 wt.-%
fillers
as well as, per 100 parts by wt. of the previously named plastics,
0.1 to 1.0 parts by wt. of
stabilisers like sterically hindered phenolic anti-oxidants, phenolic phosphites, thioesters of aliphatic carboxylic acids,
0.1 to 2 parts by wt. of
lubricants like metal salts of carboxylic acids, montan acid esters, hydrogenated hydrocarbon resins
0 to 5 parts by wt. of
colorants
0 to 4 parts by wt. of
aliphatic and/or naphthenic extender oils
and has a tensile strength of at least 24 N/mm² in the longitudinal direction as well as an extension at break of at least 450%.

5. Protective foil according to one of claims 1 to 3, characterised in that the support foil is produced in a thickness of about 0.2 to 2 mm by calendering or extrusion of
45 to 25 wt.-% of
EPDM and/or EPM,
75 to 55 wt.-% of
homo- and/or copolymer of propylene
0 to 6 wt.-% of
fillers
as well as, per 100 parts by wt. of the previously named plastics,
0.1 to 1.0 parts by wt. of
stabilisers like sterically hindered phenolic antioxidants, phenolic phosphites, thioesters of aliphatic carboxylic acids,
0.1 to 2 parts by wt. of
lubricants like metal salts of carboxylic acids, montan acid esters, hydrogenated hydrocarbon resins
0 to 5 parts by wt. of
colorants
0 to 4 parts by wt. of
aliphatic and/or naphthenic extender oils,
and has a tensile strength of at least 24 N/mm² in the longitudinal direction as well as an extension at break of at least 450%.

6. Protective foil according to one of claims 1 to 5, characterised in that the adhesive layer is provided in a thickness corresponding to a weight per unit area of about 40 to 100 g/m².

7. Protective foil according to one of claims 1 to 6, characterised in that the support foil is pretreated on the side to be connected with the adhesive layer by means of a corona discharge.

8. Protective foil according one of claims 1 to 7, characterised in that a polypropylene foil of a thickness of about 50 to 150 $\mu$ is provided as covering layer.

**Revendications**

1. Feuille de protection multicouche, auto-adhésive et emboutissable, notamment pour le garnissage intérieur et extérieur des véhicules automobiles, constituée par
   - une feuille support contenant une matière synthétique thermoplastique, des charges et les additifs usuels,
   - une couche adhérente auto-adhésive,
   - éventuellement, une couche de primaire pour la couche adhérente, appliquée sur la feuille support,
   - une couche de recouvrement sous forme de feuille ou de papier de séparation sur la couche adhérente, caractérisée en ce que la feuille support contient
   65 à 25% en poids
   de terpolymère d'éthylène-propylène-diène et/ou de copolymère d'éthylène-propylène à partir de 65 à 82% en poids d'éthylène, de 18 à 35% en poids de propylène et de 0 à 8% en poids d'un tiers composant,
   35 à 75% en poids
   d'homo- et/ou de copolymère de propylène,
   0 à 10% en poids
   de charges telles que craie, noir de carbone, silice, anhydride silicique, ainsi que des lubrifiants et stabilisants additionnels,
   - que la couche adhérente consiste en une masse auto-adhésive réticulée à base d'acrylates d'alkyle et/ou de méthacrylate et/ou de monomères éthyléniquement insaturés copolymérisables tels que l'acide acrylique et
   - qu'une feuille de polyoléfine siliconée sur une face est prévue en tant que couche de recouvrement.

2. Feuille de protection selon la revendication 1, caractérisée en ce que l'on met en oeuvre pour la feuille support un copolymère d'éthylène-propylène et/ou un terpolymère d'éthylène-propylène-diène partiellement cristallin à partir de
   65 à 82% en poids
   d'éthylène
   18 à 35% en poids
   de propylène
   0 à 8% en poids
   d'un tiers composant

avec un indice de fluidité MFI (230/5) de 0,5 à 2,0 g/10 min. et une résistance à la traction d'au moins 5 N/mm².

3. Feuille de protection selon la revendication 1, caractérisée en ce que l'on met en oeuvre un homopolymère de propylène et/ou un copolymère de propylène avec un indice de fluidité MFI (190/5) inférieur à 1 g/10 min.

4. Feuille de protection selon l'une des revendications 1 à 3, caractérisée en ce que la feuille support est produite par calandrage ou extrusion, sous une épaisseur d'environ 0,2 à 2 mm, de
   60 à 40% en poids
   d'EPDM et/ou d'EPM,
   40 à 60% en poids
   d'homo- et/ou de copolymère de propylène
   0 à 6% en poids
   de charges, ainsi que, pour 100 parties en poids des matières synthétiques précitées,
   de 0,1 à 1,0 partie en poids
   de stabilisants tels que des anti-oxydants phénoliques stériquement encombrés, des phosphites phénoliques, des thioesters d'acides carboxyliques aliphatiques,
   de 0,1 à 2 parties en poids
   de lubrifiants tels que des sels métalliques d'acides carboxyliques, des esters d'acide montanique, des résines hydrocarbonées hydrogénées,
   de 0 à 5 parties en poids
   de matières colorantes,
   de 0 à 4 parties en poids
   d'huiles de dilution aliphatiques et/ou naphténiques
   et qu'elle présente dans le sens longitudinal une résistance à la traction d'au moins 24 N/mm², ainsi qu'un allongement à la rupture d'au moins 450%.

5. Feuille de protection selon l'une des revendications 1 à 3, caractérisée en ce que la feuille support est produite par calandrage ou extrusion, sous une épaisseur de 0,2 à 2 mm, de
   45 à 25% en poids
   d'EPDM et/ou d'EPM,
   75 à 55% en poids
   d'homo- et/ou de copolymère de propylène
   0 à 6% en poids
   de charges, ainsi que, pour 100 parties en poids des matières synthétiques précitées,
   de 0,1 à l,0 partie en poids
   de stabilisants tels que des anti-oxydants phénoliques stériquement encombrés, des phosphites phénoliques, des thioesters d'acides carboxyliques aliphatiques,

de 0,1 à 2 parties en poids de lubrifiants, tels que des sels métalliques d'acides carboxyliques, des esters d'acide montanique, des résines hydrocarbonées hydrogénées,
de 0 à 5 parties en poids de matières colorantes,
de 0 à 4 parties en poids d'huiles de dilution aliphatiques et/ou naphténiques
et qu'elle présente dans le sens longitudinal une résistance à la traction d'au moins 24 N/mm², ainsi qu'un allongement à la rupture d'au moins 450%.

6. Feuille de protection selon l'une des revendications 1 à 5, caractérisée en ce que la couche adhérente est prévue en une épaisseur correspondant à un grammage d'environ 40 à 100 g/m².

7. Feuille de protection selon l'une des revendications 1 à 6, caractérisée en ce que la feuille support est prétraitée par décharge en couronne sur la face liée à la couche adhérente.

8. Feuille de protection selon l'une des revendications 1 à 7, caractérisée en ce qu'une feuille de polypropylène d'une épaisseur d'environ 50 à 150 μ est prévue en tant que couche de recouvrement.

# FIG. 1

# FIG. 2